(19) Europäisches Patentamt
European Patent Office
Office européen des brevets

(11) EP 1 903 308 A2

(12) EUROPEAN PATENT APPLICATION

(43) Date of publication:
26.03.2008 Bulletin 2008/13

(51) Int Cl.:
*G01C 21/28* (2006.01)   *G01C 21/16* (2006.01)

(21) Application number: 07117008.8

(22) Date of filing: 23.09.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 25.09.2006 US 534951

(71) Applicant: Honeywell International Inc.
Morristown NJ 07962 (US)

(72) Inventors:
• Bye, Charles T.
Eden Prairie, MN 55347 (US)
• Vallot, Lawrence C.
Shoreview, MN 55126 (US)

(74) Representative: Buckley, Guy Julian
Patent Outsourcing Limited
1 King Street
Bakewell
Derbyshire DE45 1DZ (GB)

(54) **Systems and methods for a hybrid state transition matrix**

(57) Systems and methods for improved state estimates using filter algorithms are provided. In one embodiment, a method for navigating a vehicle comprises executing a filter algorithm (130) having a state transition matrix that calculates an update to a state vector based on a state vector for a previous instance in time; receiving inertial measurement data from at least one inertial sensor (112); receiving data from at least one navigation aid (114); monitoring for the existence of one or more conditions based on a known error characteristic of the at least one inertial sensor (112); when the one or more conditions exist, calculating at least one element of the one or more elements of the state transition matrix based on the data from the at least one navigation aid (114); and when the one or more conditions do not exist, calculating the one or more elements of the state transition matrix based on inertial measurement data.

Fig. 1

EP 1 903 308 A2

**Description**

## BACKGROUND

Discrete time-based navigation systems, such as strapdown navigation system, are used to determine an aircraft's navigation state parameters, (such as the position, velocity and attitude of the aircraft) based on the periodic reception of sensor data. The sensor data would include inertial sensor data received at a high rate and navigation aid sensor data received at a low rate. In between measurement updates, the navigation state parameters are estimated based on the data from inertial sensors. These navigation systems use a Kalman filter to compute an estimate of how the navigation system errors propagate between measurement updates.

A Kalman filter is a filter algorithm implemented in a digital computer system that acts to filter and blend data from navigation sensors having varying degrees of accuracy, in order to establish an optimal estimate of an aircraft's navigation state. To calculate these estimates, the Kalman filter includes an error model that represents how the errors associated with the inertial sensor data as propagates through navigation equations propagate over time. Conventionally, a Kalman filter's error model, by necessity, is a linear approximation of the non-linear propagation of navigation errors. The linear approximation is achieved using the common practice of taking non-linear error equations and linearizing them about some operating for the purpose of computing the Kalman filter's transition matrix.

In the past, the high rate sensor data from high-precision inertial navigation sensors was available to a navigation system and used to build a linear error model. This linear error model allowed a Kalman filter to linearize non-linear error equations around a current estimate of an aircraft's trajectory and compute its current estimate of the navigation error based on the aircraft's trajectory. Measurement data from high-precision inertial navigation sensors was preferred because the drift error associated with inertial data was negligible in the short term. While this has worked well in the past, the industry has shifted away from using high-precision inertial sensors to lower cost sensors which, while less expensive, produce data with higher measurement errors. The use of low accuracy inertial sensors has shown that the assumption that the drift errors are negligible in the short term to be flawed. The lower accuracy sensors are also more susceptible to increased errors produced by environmental factors such as vibration. This results is a decrease in the quality of data available to build the Kalman filter's linearized error model and ultimately results in unreliable estimate being computed by the Kalman filter.

For the reasons stated above and for other reasons stated below which will become apparent to those skilled in the art upon reading and understanding the specification, there is a need in the art for improved systems and methods for providing state estimates using filter algorithms.

## SUMMARY

The Embodiments of the present invention improved systems and methods for providing state estimates using filter algorithms and will be understood by reading and studying the following specification.

In one embodiment, a method for navigating a vehicle comprises executing a filter algorithm having a state transition matrix that calculates an update to a state vector based on a state vector for a previous instance in time; receiving inertial measurement data from at least one inertial sensor; receiving data from at least one navigation aid; monitoring for the existence of one or more conditions based on a known characteristic of the at least one inertial sensor or navigation aid; when the one or more conditions exist, calculating at least one element of the one or more elements of the state transition matrix based on the data from at least one navigation aid; and when the one or more conditions do not exist, calculating the one or more elements of the state transition matrix based on inertial measurement data. Depending on the error characteristics of the inertial sensors and navigation aid, one or more elements of the state transition matrix can computed using a combination of data from both the inertial sensor and the navigation aid.

## DRAWINGS

Embodiments of the present invention can be more easily understood and further advantages and uses thereof more readily apparent, when considered in view of the description of the preferred embodiments and the following figures in which:

Figure 1 is a block diagram of a navigation system of one embodiment of the present invention;

Figure 2 is a block diagram illustrating a state transition matrix of one embodiment of the present invention;

Figure 3 is a flow chart illustrating a method of one embodiment of the present invention.

In accordance with common practice, the various described features are not drawn to scale but are drawn to emphasize features relevant to the present invention. Reference characters denote like elements throughout figures and text.

## DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

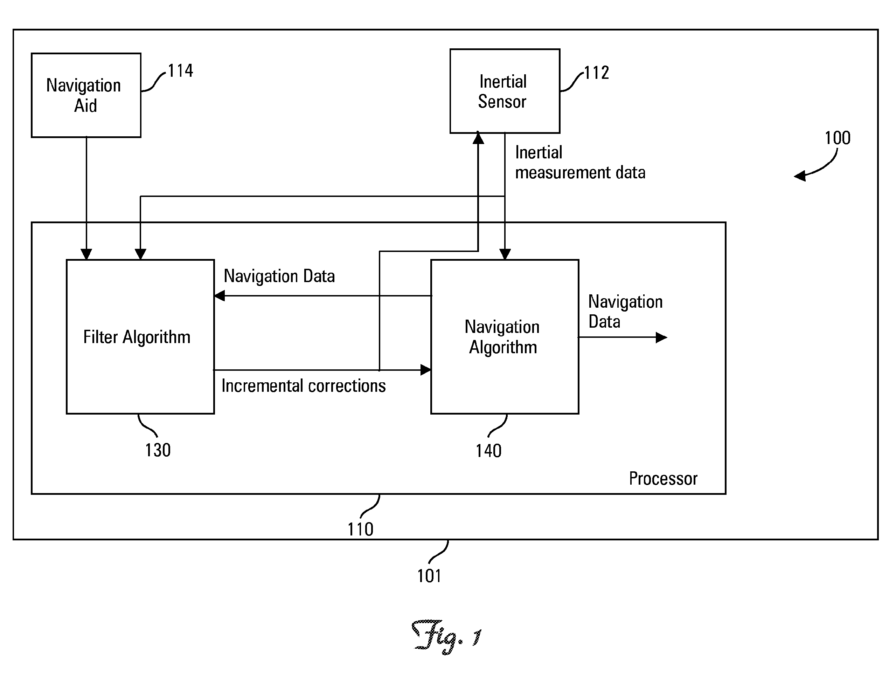

Figure 1 is a block diagram illustrating a navigation system 100 for a vehicle 101 of one embodiment of the present invention. Examples of vehicle 101 include land vehicles, aircraft or a spacecraft, but embodiments of the present invention are not limited to just these vehicles. Navigation system 100 comprises a processor 110 coupled to at least one inertial sensor 112 and at least one navigation aid 114. Inertial sensor 112 includes one or more accelerometers and/or gyroscopes that provide inertial data to processor 110. In the particular embodiment shown in Figure 1, processor 110 is a general purpose digital computer. In other embodiments, other processing means are used such as, but not limited to, a digital signal processor, an FPGA, or other programmable device.

In the embodiment of Figure 1, processor 110 is programmed to implement a filter algorithm 130 and a navigation algorithm 140 using inertial measurement data received by processor 110 from inertial sensor 112. In one embodiment, the filter algorithm 130 implements a Kalman filter. In alternate embodiments, the filter algorithm 130 implements one or more other Kalman derivative filters such as, but not limited to, a fast Kalman filter (FKF), an extended Kalman filter (EKF), and an unscented Kalman filter (UKF). In one embodiment, navigation algorithm 140 implements at strapdown navigation system. Navigational algorithm 140 receives the inertial measurement data from inertial sensor 112 and incremental corrections to the inertial measurement data provided by filter algorithm 130 and calculates the position, velocity and attitude of vehicle 101 (also referred to as a navigation solution for vehicle 101) using any one of several techniques known to those of ordinary skill in the art of navigation systems. Filter algorithm 130 outputs incremental corrections to the inertial measurement data by calculating a best blended navigation solution that optimally estimates the current state of vehicle 101 as represented for any one instance in time by state variables grouped into a state vector.

As would be appreciated by one of ordinary skill in the art upon studying this specification, a Kalman filter calculates updates to a state vector based on measurement data updates, estimated sensor noise associated with those measurement data updates, estimates of process noise, and an error model that represent how the errors associated with measurement data change over time. The new state vector is calculated by multiplying a state transition matrix by a previous state vector. Thus, the state transition matrix determines how state vectors are updated between measurement data updates. In the past, inertial measurement data was considered the best data to use for determining the elements of a navigation Kalman filter's state transition matrix, because inertial measurement data demonstrates a relatively small drift error over short periods of time (i.e., in the order of seconds) and also because inertial sensor data is reliably available from inertial sensors. Thus, the state vector estimates and incremental corrections provided by such a Kalman filter were considered reliable estimates of "truth" (i.e. the true state of the system).

With the introduction of lower costs inertial sensors, the assumption that using inertial measurement data always provides the best estimate of "truth" over short periods of time is no longer valid. When certain environmental conditions (such as high vibration, for example) are present, other navigation aids may provide a better data for calculating the state transition matrix. Embodiments of the present invention selectively calculate specified elements in a state transition matrix (such as a state transition matrix for filter algorithm 130, for example) using data from navigation aids rather than data from inertial sensors during predefined events or conditions. Those conditions are defined by the known error characteristics of the inertial sensors, as described in greater detail below. Using a state transition matrix as improved by embodiments of the present invention, the filter algorithm 130 updates state vectors to more closely approximate "truth" than when compared to results based on inertial sensor data.

As one example, under ideal flight conditions state vector estimates calculated by a Kalman filter based on navigation signals from a Global Positioning System (GPS) satellite exhibit a greater measurement data error at 1 second than estimates calculated by a Kalman filter based on inertial sensors. GPS navigation signals also fail to provide certain data useful for updating elements of the transition matrix, such as vehicle 101's attitude, for example. However, when low cost inertial measurement units are used and high vibrations are present, GPS signals will provide a better reference for updating the transition matrix elements than inertial data. Under such circumstances, a Kalman filter will produce state vector updates that more accurately reflect "truth" by incorporating GPS navigation data into the state transition matrix than with inertial measurement data.

To enable the incorporation of navigation aid data into the calculation of filter algorithm 130's state transition matrix, navigation system 100 provides the output of navigation aid 114 to processor 110. In one implementation of navigation system 100, navigation aid 114 is a global navigation satellite system (GNSS) receiver that produces position and velocity measurement data based on navigation signals from one or more GNSS satellites (not shown). Examples of a GNSS include, but are not limited to, the global positioning system (GPS), and the Galileo satellite system. In alternate embodiments and implementations, navigation aid 114 may include one or more other aids, such as, but not limited to a barometric altimeter, or a radar velocity sensor.

In operation, filter algorithm 130 receives inertial measurement data from inertial sensor 112, navigation aid data from navigation aid 114 as well as navigation data (i.e., position, velocity and attitude data) from navigation algorithm 140. Filter algorithm 130 is programmed to calculate a new state vector based on a previous state vector multiplied by the state transition matrix. Filter algorithm 130 outputs either all or part of the new state vector to navigation algorithm 140, including information that provides incremental corrections to the inertial measurement data provided by inertial sensor 112.

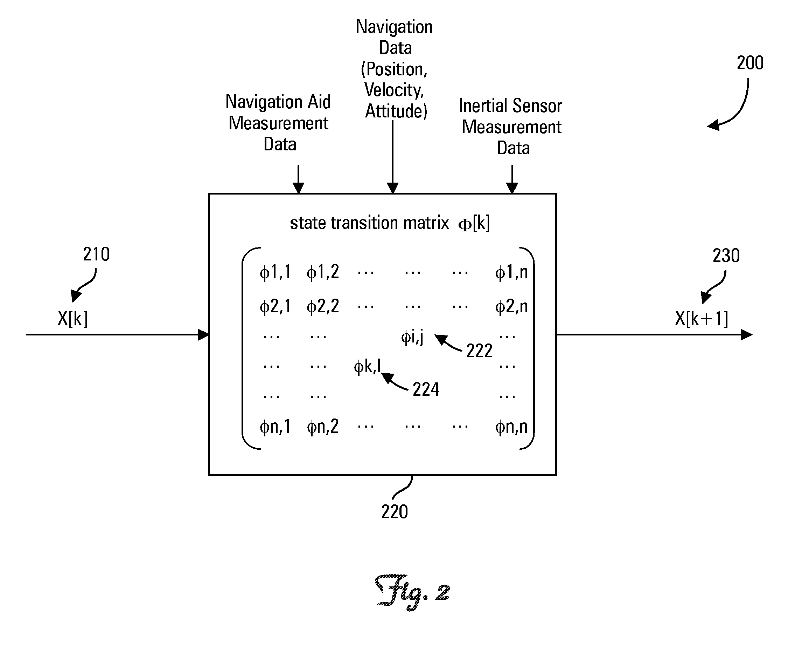

Figure 2 is a block diagram illustrating a state transition matrix for calculating an updated state vector, of one embodiment of the present invention shown generally at 200. Figure 2 graphically illustrates an implementation of the equation:

$$\mathbf{X}[k+1] = \mathbf{\Phi}[k]\mathbf{X}[k]$$

where X[k] (shown generally at 210) is an n x 1 vector representing the state of the system at time index k, X[k+1] (shown generally at 230) is an n x 1 vector representing the state of the system at time index k+1, and $\Phi$[k] is an n x n matrix representing the state transition matrix (shown at 220), as it exists at time index k . In one embodiment of the present invention, filter algorithm 130 is implemented using the state transition matrix 220 shown in Figure 2. Filter algorithm 130 periodically updates the elements of the state transition matrix 220 using the data provided by inertial sensor 112, navigation aid 114 and navigation algorithm 140.

As previously discussed, under nominal operating conditions, a state transition matrix 220 having elements calculated from inertial sensor measurement data provides a state vector that most closely represent "truth" for use by navigation algorithm 140 in calculating a navigation solution. When certain anomalous operating conditions arise (such as high vibration, for example) the inertial sensor measurement data available to filter algorithm 130 degrades. If this degradation reaches a certain threshold, a state transition matrix 220 calculated from the inertial data will produce an erroneous state vector 230, causing navigation algorithm 140 to output an incorrect navigation solution. Embodiments of the present invention enable a navigation system to monitor for anomalous operating conditions and selectively calculate elements of the state transition matrix 220 using data from navigation aids or inertial sensor data, when the anomalous operating conditions reach predetermined thresholds. For example, in one embodiment, state transition matrix 220 element $\varphi_{i,j}$ (shown generally at 222) is calculated using a first algorithm that incorporates inertial measurement data from inertial sensor 112. Filter algorithm 130 monitors for anomalous operating conditions for which element $\varphi_{i,j}$ is known to be sensitive, based on the error characteristics of inertial sensor 112. When such an anomalous operating conditions arises and exceeds a pre-determine threshold, filter algorithm 130 begins calculating state transition matrix 220 element $\varphi_{i,j}$ using a second algorithm that incorporates data from navigation aid 114. In one embodiment, an anomalous operating condition is said to exceed the pre-determined threshold when one or more parameters no longer fall within a pre-defined operating range. For example, in an implementation where the effects of high vibration levels are a concern, the filter algorithm 130 selectively switches from the first algorithm to the second algorithm based on factors such as, but not limited to, the root-mean-square (RMS) amplitude of a vibration, the frequency of a vibration, or a change in the vibration over a period of time. In another implementation, filter algorithm 130 selectively switches from a first algorithm to a second algorithm for calculating element $\varphi_{i,j}$ based on the value of another element of state transition matrix 220, such as element $\varphi_{k,1}$ (shown generally at 224) for example. Such an implementation is useful when the value of $\varphi_{k,1}$ is indicative of a condition known to cause an increase in error from the inertial sensor. In another implementation, filter algorithm 130 can selectively switch from a first algorithm to a second algorithm based on the value of an element of a state vector, for the same reason described above.

For any of the elements of state transition matrix 220 a determination of whether to enable switching between an inertial data based algorithm and a navigation aid based algorithm is made during the design stage of system 100. During the design state, a system designer considers the error characteristics of the particular inertial sensors used in system 100. The system designer further considers the sensitivity of individual elements of state transition matrix 220 to those error characteristics. The system designer also considers the data available from any navigation aid 114 available to system 100, the error characteristics of that particular navigation aid, and then considers the sensitivity of individual elements of state transition matrix 220 to those error characteristics. The system designed would then select under what operating conditions a state transition matrix 220 element based on the navigation aid 114 produces a result that more closely approximates "truth" than one based on inertial sensor 112. The system designer would further determine what thresholds (if any) are appropriate for switching between an inertial data based algorithm and a navigation aid based algorithm for any particular element of state transition matrix 220. During real time operation, the filter algorithm 130 is enabled to switch between the algorithms based on the thresholds determined by the system designer.

As would be appreciated by one of ordinary skill in the art, different thresholds, based on different error characteristics, can be established for different elements of state transition matrix 220. Further, in other embodiments, filter algorithm 130 can utilize data from one or more of a plurality of different navigation aids to calculate different state transition matrix elements. In still other embodiments, elements of a state transition matrix can be calculated based on a combination of navigation aids and inertial sensors.

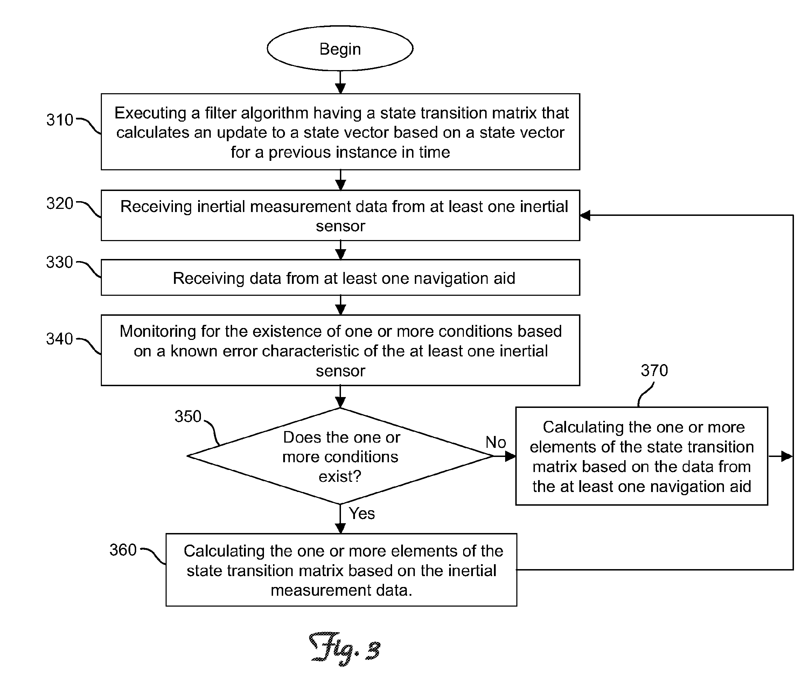

Figure 3 is a flow chart illustrating a method of one embodiment of the present invention. In one embodiment, the method is implemented by a navigation system, such as system 100 shown in Figure 1. In other embodiments, the method is implemented by a different system. The method begins at 310 with executing a filter algorithm having a state transition matrix that calculates an update to a state vector based on a state vector for a previous instance in time. In one embodiment, the filter algorithm implements a Kalman filter. In alternate embodiments, the filter algorithm implements one or more other Kalman derivative filters such as, but not limited to, a fast Kalman filter (FKF), an extended Kalman filter (EKF), and an unscented Kalman filter (UKF). In one embodiment, the state vector represents the current state of a vehicle. The method proceeds to 320 with receiving inertial data from at least one inertial sensor. In one embodiment, the inertial sensor comprises one or more accelerometers and/or gyroscopes wherein the inertial data includes one or both of acceleration forces experienced by the vehicle and the attitude (i.e., the roll, pitch and yaw) of the vehicle. The method further proceeds to 330 with receiving data from at least one navigation aid. In alternate embodiments, the navigation aid includes one or more of, but not limited to, a GNSS receiver, a barometric altimeter, or a radar velocity sensor.

The method proceeds to 340 with monitoring for the existence of one or more operating conditions based on the known error characteristics of the at least one inertial sensor. Known error characteristics of the inertial sensor describe the inertial sensor's error response to various environmental conditions including factors such as, but not limited to, vibration, temperature and pressure. For example, in one embodiment where the inertial sensor's error characteristics indicate a sensitivity to vibrations, monitoring for the existence of one or more operating conditions further comprises monitoring for a predetermined level of vibration, monitoring for a predetermined frequency range of vibrations, or monitoring for a degree of change in a vibration over time. In one embodiment, the method further includes monitoring for the existence of one or more operating conditions based on known error characteristics of the at least one navigation aid. In another embodiment, monitoring for the existence of one or more operating conditions includes monitoring the value of an element of the state transition matrix that is indicative of a condition known to cause an increase in error from the inertial sensor, or monitoring the value of an element of a state vector for the same reason. When the one or more operating conditions do not exist (checked at 350), the method proceeds to 360 and the one or more elements of the state transition matrix are calculated based on the inertial measurement data from the inertial sensors. When the one or more operating conditions do exist (checked at 350), the method proceeds to 370 and the one or more elements of the state transition matrix are calculated based on the navigational aid data. In one embodiment, the method loops to repeat blocks 320 to 350 and recalculate the state transition matrix (at blocks 360, 370) based on the latest data available.

In one embodiment, the method further includes calculating a navigation solution, using a navigation algorithm, based on the inertial measurement data from the at least one inertial sensor. In one such embodiment, the filter algorithm calculates one or more incremental corrections to the inertial measurement data and provides the corrections to the navigation algorithm. In another such embodiment, the filter algorithm calculates one or more incremental corrections to the navigation data and provides the navigation data corrections to the navigation algorithm. Calculating a navigation solution comprises calculating navigation data such as a position, a velocity, and an attitude of a vehicle.

Although this specification has largely focused on the calculation of a state transition matrix for the purpose of calculating updates to the state vector, embodiments of the present invention are not so limited but include other applications of the state transition matrix. For example, a person of ordinary skill in the art would appreciate that updates to a Kalman filter error covariance matrix, P (a measure of the estimated accuracy of the state estimate) are also calculated with the state transition matrix using the formula:

$$P[k+1] = \Phi[k]P[k]\Phi[k]^{\mathrm{T}} + Q[k]$$

where P[k] represents the error covariance at time index k, P[k+1] represents the error covariance at time index k+1, $\Phi$[k] represents the state transition matrix as it exists at time index k, and Q[k] represents the covariance of the process noise at time index k+1.

Several means are available to implement the systems and methods of the current invention as discussed in this specification. These means include, but are not limited to, digital computer systems, microprocessors, programmable controllers and field programmable gate arrays. Therefore other embodiments of the present invention are program instructions resident on computer readable media which when implemented by such controllers, enable the controllers to implement embodiments of the present invention. Computer readable media include any form of computer memory, including but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions include, but are not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

**Claims**

1. A navigation system 100 for a vehicle 101, the system comprising:

   at least one inertial sensor 112;
   at least one navigation aid 114;
   a processor 110 adapted to receive inertial measurement data from the at least one inertial sensor 112 and navigation aid data from the at least one navigation aid 114, the processor 110 further adapted to implement a filter algorithm 130 having a state transition matrix 220 that calculates an update to a state vector based on a state vector for a previous instance in time; and
   wherein the processor 110 is further adapted to selectively calculate one or more elements of the state transition matrix 220 using the inertial measurement data or the navigation aid data based on a known error characteristic of the at least one inertial sensor 112 or the at least one navigation aid 114.

2. The system of claim 1, wherein the filter algorithm 130 implements one of a Kalman filter, a fast Kalman filter (FKF), an extended Kalman filter (EKF), and an unscented Kalman filter (UKF).

3. The system of claim 1, wherein the processor 110 is further adapted to implement a navigation algorithm 140 that calculates a navigation solution based on the inertial measurement data from the at least one inertial sensor 112; and
   wherein the filter algorithm 130 is further adapted to calculate one or more incremental corrections to the inertial measurement data and provide the one or more incremental corrections to the navigation algorithm.

4. The system of claim 0, wherein the navigation solution includes estimates of one or more of a position of the vehicle, a velocity of the vehicle, and an attitude of the vehicle.

5. The system of claim 0, wherein the filter algorithm 130 is further adapted to receive navigation solution data from the navigation algorithm 140 and calculate the one or more incremental corrections to the inertial measurement data based on the state transition matrix 220 and the navigation solution data.

6. The system of claim 1, wherein the at least one navigation aid 114 includes one or more of a GNSS receiver, a barometric altimeter, and a radar velocity sensor.

7. The system of claim 1, wherein the filter algorithm 130 is adapted to monitor for the existence of one or more operating conditions based on the known error characteristics of the at least one inertial sensor 112, wherein when the one or more operating conditions exist, the filter algorithm 130 is adapted to calculate at least one element of the one or more elements of the state transition matrix 220 based on the navigational aid data.

8. The system of claim 0, wherein when the one or more operating conditions do not exist, the filter algorithm 130 is adapted to calculate the one or more elements of the state transition matrix 220 based on the inertial measurement data or the navigation aid data.

9. The system of claim 0, wherein when the one or more operating conditions are based on one or more of a predetermined level of vibration, a predetermined frequency range of vibrations, a degree of change in a vibration over time, a value of an element of the state transition matrix 220, and a value of an element of a state vector.

Fig. 1

Fig. 2

310 Executing a filter algorithm having a state transition matrix that calculates an update to a state vector based on a state vector for a previous instance in time

320 Receiving inertial measurement data from at least one inertial sensor

330 Receiving data from at least one navigation aid

340 Monitoring for the existence of one or more conditions based on a known error characteristic of the at least one inertial sensor

350 Does the one or more conditions exist?

No → 370 Calculating the one or more elements of the state transition matrix based on the data from the at least one navigation aid

Yes → 360 Calculating the one or more elements of the state transition matrix based on the inertial measurement data.

Begin

Fig. 3